# EUROPÄISCHE PATENTSCHRIFT

(11) **EP 2 090 529 B1**
(45) Veröffentlichungstag und Bekanntmachung des Hinweises auf die Patenterteilung: **22.06.2016**
(21) Anmeldenummer: 08002580.2
(22) Anmeldetag: 12.02.2008
(51) Int. Cl.: B65G 1/04

(54) **Vorrichtung zur Handhabung von Arzneimittelpackungen**
Device for handling packets of medicine
Dispositif destiné à la manipulation d'emballages de médicaments

(43) Veröffentlichungstag der Anmeldung: 19.08.2009
(73) Patentinhaber: Marquardt & Partner GbR, 14195 Berlin (DE)
(72) Erfinder: Marquardt, Michael, 10623 Berlin (DE); Göricke, Peter, 14195 Berlin (DE)
(74) Vertreter: Behrendt, Arne

(56) Entgegenhaltungen:
- WO-A-03/043912
- DE-A1- 10 000 684
- DE-U1- 29 505 214

## Beschreibung

Die Erfindung betrifft eine Vorrichtung zur Handhabung von Arzneimittelpackungen an einem Regallager für Apotheken, mit mindestens einem Regal, dessen Regalfächer in Richtung auf einen rechnergesteuerten Manipulator offen sind, der zum Einlegen, zur Entnahme und zum Kommissionieren von Arzneimittelpackungen dient und an Führungen geführt rechnergesteuert vor dem Regal verfahrbar ist, wobei der Manipulator mehrere in Richtung auf die Regalfächer offene Aufnahmefächer aufweist, die neben und/oder übereinander angeordnet sind, wobei der Manipulator rechnergesteuert derart verschiebbar ist, dass jedes Aufnahmefach des Manipulators vor jedem Regalfach des Regals positionierbar ist, und wobei jedem Aufnahmefach des Manipulators eine rechnergesteuerte Verschiebevorrichtung zum Ziehen von Arzneimittelpackungen aus dem Regalfach des Regals in das gegenüberliegender Aufnahmefach des Manipulators sowie zum Schieben von Arzeimittelpackungen aus dem Aufnahmefach des Manipulators in das gegenüberliegende Regalfach des Regals zugeordnet ist.

Eine derartige Vorrichtung ist beispielsweise aus der WO 03/043912 A1 bekannt. Bei dieser vorbekannten Vorrichtung befinden sich jeweils mehrere Arzneimittelpackungen in Lagercontainern, die in die Regalfächer eingeschoben werden bzw. aus diesen Regalfächern heraus in die Aufnahmefächer des Manipulators gezogen werden können. Zum Zusammenstellen von Kommissionen, müssen die einzelnen Arzneimittelpackungen innerhalb des Manipulators aus dessen Lagercontainern herausgenommen und in gesonderte Kommissioniercontainer umgeladen werden. Dieses Umladen ist maschinell und operativ außerordentlich umständlich und zeitraubend. Hinzu kommt, dass die in jedem Aufnahmefach des Manipulators angeordnete Verschiebevorrichtung als Verschiebeorgan jeweils Hydraulikzylinder verwendet, die unterhalb eines Führungsrahmens angeordnet sind und jeweils mit einer Hebevorrichtung versehen sind, die den Hydraulikzylinder jeweils in die Arbeitsposition anhebt. Diese Ausgestaltung der Verschiebevorrichtung erfordert einen hohen apprativen Aufwand und ermöglicht dabei nur verhältnismäßig kleine Verschiebewege.

Ein anderes aus der DE 100 00 684 A1 bekanntes automatisierte Apothekenlager hat den Nachteil, dass jedem der vielen Regalfächer des Regals ein eigener Verschiebeantrieb für die Verschiebung der darin eingelagerten Arzneimittelpackungen benötigt. Hierdurch ist der erforderliche maschinelle Aufwand außerordentlich hoch, insbesondere wenn - wie bei Apothekenlagern üblich - eine extrem große Zahl von Regalfächern bereitgehalten wird.

Ein weiteres Problem besteht darin, dass der Manipulator immer nur die jeweils vorne im Regalfach liegende Arzneimittelpackung im Zugriff hat. Das ist insbesondere dann problematisch, wenn - wie bei der sogenannten chaotischen Lagerung üblich - in einem Regalfach hintereinander verschiedene Arzneimittelpackungen liegen. Um in diesem Fall an die weiter hinten in der Reihe liegenden Arzneimittelpackungen heranzukommen, müssen bei dem vorbekannten Apothekenlager zunächst die vorne liegenden Arzneimittel entnommen werden und anderswo abgelegt werden, bevor die weiter hinten liegenden Arzneimittelpackungen zugänglich werden. Das führt bei der Zusammenstellung von Arzneimittelkommissionen zu sehr langen Fahrwegen des Manipulators und einem entsprechenden Zeitverbrauch.

Es ist deshalb Aufgabe der Erfindung, die Vorrichtung der eingangs genannten Art dahingehend weiterzubilden, dass auch bei einer sehr großen Zahl von Regalfächern der für das Einlagern, Entnehmen und Kommissionieren von Arzneimittelpackungen erforderliche maschinelle Aufwand gering bleibt und zugleich für die Zusammenstellung von Arzneimittelkommissionen weniger Zeit benötigt wird.

Zur Lösung dieser Aufgabe schlägt die Erfindung vor, dass die in den Aufnahmefächern des Manipulators angeordneten Verschiebevorrichtungen jeweils ein als Verschiebeorgan dienendes Federstahlband aufweisen, welches in gestrecktem Zustand durch eine quer zu seiner Längsrichtung verlaufende Wölbung versteift ist und im gebogenen Zustand quer zu seiner Längsrichtung flach ausgebildet ist. Ein solches Federstahlband ist für das Ziehen und Schieben der Arzneimittelpackungen ausreichend steif und kann dennoch leicht gebogen werden, um am hinteren Ende oder hinter dem jeweiligen Aufnahmefach raumsparend umgelenkt und/oder gespeichert zu werden.

Besonders einfach ist es, wenn das Federstahlband am rückwärtigen Ende des Verschiebeweges zu einer Rolle aufgewickelt bereitgehalten wird. Das zu einer Rolle aufgewickelte Federstahlband macht es möglich, ein praktisch beliebig lang ausgebildetes Verschiebeorgan auf engstem Raum unterzubringen.

Zum Verschieben des Federstahlbandes ist dem gestreckten Abschnitt des Federstahlbandes ein rechnergesteuerter Verschiebeantrieb zugeordnet. Dieser Verschiebeantrieb wird zweckmäßig durch ein von einem Schrittmotor angetriebenes Zahnrad gebildet, welches in eine dem Federstahlband zugeordnete biegsame Zahnstange eingreift.

Diese biegsame Zahnstange kann entweder an dem Federstahlband selbst ausgebildet sein oder mit dem Federstahlband verbunden sein. Diese Zahnstange kann beispielsweise von einer unter das Federstahlband geklebten biegsamen Zahnstange aus Kunststoff gebildet werden.

Dem vorderen Ende des Federstahlbands ist zweckmäßig ein Gleitschlitten zugeordnet, der beim Betrieb der Verschiebevorrichtung leicht über den Spalt zwischen Manipulator und Regal gleitet und zugleich mit einer geeigneten Fixierungsvorrichtung für die zu bewegende Arzneimittelpackung versehen ist.

Diese Fixierungsvorrichtung wird zweckmäßig von einem an dem Gleitschlitten befestigten Saugkopf gebildet, der zum Festhalten und/oder Freigeben von zu bewegenden Arzneimittelpackungen versehen ist.

Dieser Saugkopf ist zweckmäßig mit einem entlang dem Federstahlband verlaufenden Saugschlauch verbunden, über den der Saugkopf gesteuert an ein Vakuum anschließbar ist. Ein derart angesteuerter Saugkopf hat für das Festhalten und Loslassen der jeweiligen Arzneimittelpackung keine beweglichen Teile und ist dementsprechend preisgünstig und wenig anfällig bei sehr geringen Herstellungskosten.

Gegebenenfalls können der Saugschlauch, die biegsame Zahnstange und das Federstahlband zu einer baulichen Einheit verbunden sein, z. B. miteinander verklebt sein.

Alternativ ist es auch möglich, dass der Saugschlauch mit der biegsamen Zahnstange einstückig aus Kunststoff hergestellt ist und auf geeignete Art und Weise mit dem Federstahlband verbunden ist.

Bei der Vorrichtung gemäß der Erfindung ist die Anzahl der erforderlichen rechnergesteuerten Verschiebevorrichtungen auf die Anzahl der Aufnahmefächer im Manipulator beschränkt. Dementsprechend kann man die Anzahl der Regalfächer erheblich steigern, ohne dass dies einen erheblichen Einfluss auf den erforderlichen maschinellen Aufwand hätte. Trotz des erheblich geringeren maschinellen Aufwandes ist das Apothekenlager gemäß der Erfindung gut für die Zusammenstellung von Kommissionen geeignet und zwar auch dann, wenn einzelne Arzneimittelpackungen der Kommission nicht vorne im Regal liegen. In diesem Fall kann man nämlich in einem oder mehreren Aufnahmefächem des Manipulators die vorne liegenden Falschpackungen zwischenspeichern, sodann in andere Aufnahmefächer des Manipulators die Gutpackungen einspeichern und abschließend die zwischengelagerten Fehlpackungen in geeignete Regalfächer zurückschieben, ohne dass der Manipulator hierzu große Wege zurücklegen müsste.

Zur weiteren Erhöhung der Anzahl der Regalfächer des Apothekenlagers hat die Vorrichtung gemäß der Erfindung mindestens zwei in Einlegerichtung hintereinander angeordnete Regale, wobei das vordere Regal zur Freigabe des hinteren Regals rechnergesteuert seitlich verschiebbar ist und der Manipulator ebenfalls rechnergesteuert in seinen Führungen in Richtung auf das hintere Regal verschiebbar ist.

Zweckmäßig sind die Böden der Regalfächer des Regallagers und der Aufnahmefächer des Manipulators jeweils V-förmig ausgebildet. Diese V-förmige Ausbildung der Böden der Regalfächer des Regals einerseits und der Aufnahmefächer des Manipulators andererseits erleichtert die Ausrichtung der Aufnahmefächer des Manipulators auf die Regalfächer der Regale erheblich. Hierzu brauchen nämlich lediglich die Scheitel der beiden V-förmigen Böden auf eine Linie gebracht zu werden. Ein weiterer Vorteil der V-förmigen Böden liegt darin, dass die auf den Böden aufliegenden Arzneimittelpackungen automatisch in dem Aufnahmefach bzw. Regalfach zentriert werden und bei ihrer Verschiebung exakt linear geführt werden.

Zweckmäßig hat der Manipulator an seiner Oberseite mindestens ein Aufnahmefach, welches nach oben offen ist. Ein solches nach oben offenes Aufnahmefach ist für besonders sperrige Arzneimittelpackungen vorgesehen, deren Höhe unterschiedlich sein kann, die aber dennoch von dem nach oben offenen V-förmigen Boden des Aufnahmefachs sicher aufgenommen und festgelegt werden.

Für den vollautomatischen Betrieb der Vorrichtung ist weiterhin vorgesehen, dass neben dem oder den Regalen eine automatisch arbeitende zentrale Erfassungsstation für die ein- und auszulagernden Arzneimittelpackungen angeordnet ist, die mindestens einen den Aufnahmefächern des Manipulators zugewandten Übergabeboden für die Einzulagernden und Auszulagernden Arzneimittelpackungen aufweist, wobei jedes Aufnahmefach des Manipulators vor diesem Übergabeboden positionierbar ist. Somit kann der Manipulator von diesem Übergabeboden einzulagernde Arzneimittelpackungen aufnehmen und zu den Regalfächern der Regale bringen. Alternativ können über diesen Übergabeboden auch Arzneimittelpackungen aus der Vorrichtung ausgelagert werden, und zwar dadurch, dass der Manipulator aus den Regalfächern Arzneimittelpackungen holt und anschließend auf den Übergabeboden zurückschiebt.

Zweckmäßig ist der Übergabeboden der zentralen Erfassungsstation ebenso wie die Böden der Aufnahmefächer des Manipulators und die Böden der Regalfächer V-förmig ausgebildet.

Ein Ausführungsbeispiel der Erfindung wird im folgenden anhand der Zeichnung näher erläutert. Es zeigen:
- Fig. 1:: Schematisch eine Seitenansicht der Vorrichtung in Richtung auf die Schmalseiten der Regale gesehen;
- Fig. 2:: schematisch eine Draufsicht auf Figur 1;
- Fig. 3:: schematisch einen Längsschnitt durch ein Aufnahmefach des Manipulators;
- Fig. 4:: schematisch einen Querschnitt entlang der Linie IV-IV in Figur 3;
- Fig. 5:: schematisch eine Ansicht der Ein- und Auslagerungsseite des Manipulators vom Regal her gesehen;
- Fig. 6:: schematisch eine Teilansicht der Vorderseite eines der Regale vom Manipulator aus gesehen.

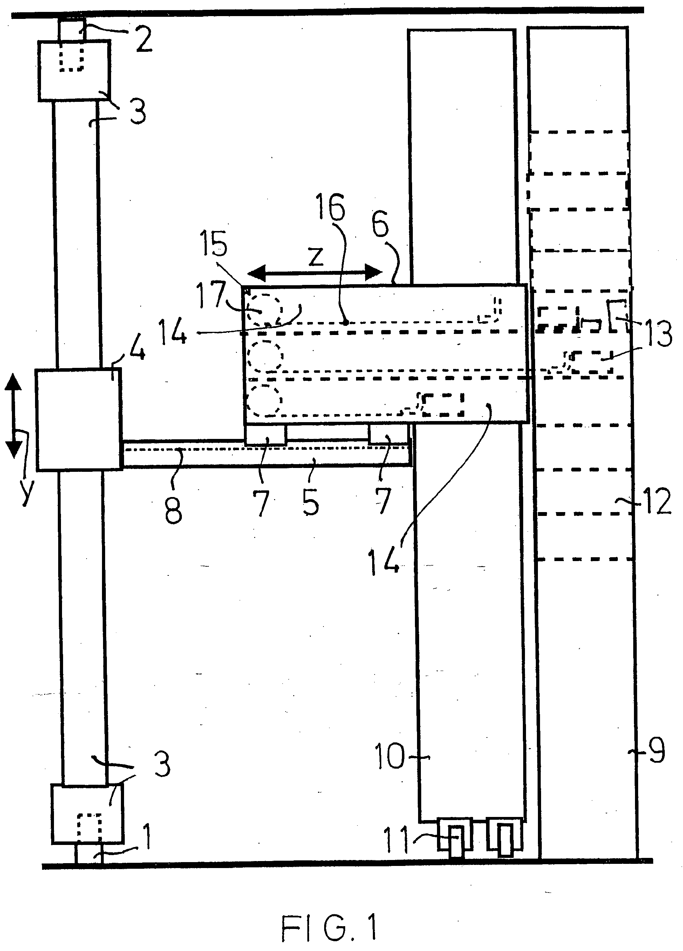

Wie zunächst aus Figur 1 ersichtlich ist, weist die Vorrichtung zur Handhabung von Arzneimittelpackungen zwei Führungsschienen 1 und 2 auf, die an Boden und Decke eines Lagerraumes montiert sind und an denen ein Führungsgestell 3 entlang einer Richtung x (d. h. in Figur 1 senkrecht zur Zeichnungsebene) rechnergesteuert verfahrbar ist. An dem Führungsgestell 3 ist über Gleitführungen 4 ein Hubtisch 5 vertikal, d. h. in der Richtung y geführt. Die Verschiebungen des Hubtisches 5 in der Richtung y sind ebenfalls exakt rechnergesteuert. Auf dem Hubtisch 5 ist ein Manipulator 6 in der Richtung z horizontal verschiebbar gelagert. Hierzu ist der Manipulator 6 auf Gleitstücken 7 an dem Hubtisch 5 in Führungen 8 geführt. Die Verschiebung des Manipulators 6 in der z-Richtung erfolgt ebenfalls exakt rechnergesteuert.

Dem Manipulator 6 gegenüberliegend sind zwei Regale angeordnet und zwar ein feststehendes hinteres Regal 9 und ein davor angeordnetes verschiebbares Regal 10. Das verschiebbare Regal 10 kann auf Gleitschienen 11 derart in der x-Richtung verschoben werden, dass es von dem Manipulator 6 aus gesehen das feststehende Regal 9 verdeckt oder freigibt. Der Manipulator 6 ist in der z-Richtung derart auf dem Hubtisch verfahrbar, dass er beide Regale 9 und 10 bedienen kann, und zwar in der zurückgezogenen Stellung das vordere Regal 10 und in der vorgeschobenen Stellung (vgl. Figur 1) das hintere Regal 9. Die Verschiebung des vorderen Regals 10 in der x-Richtung erfolgt natürlich ebenfalls rechnergesteuert, so dass die exakte Position des Manipulators 6 relativ zu dem Regal 10 bestimmt werden kann.

Die Regale 9 und 10 weisen eine Vielzahl von Regalfächern 12 auf, in welchen Arzneimittelpackungen 13 chaotisch eingelagert werden können. Die Regalfächer 12 sind in Richtung auf den Manipulator 6 offen und können von dem Manipulator 6 über diese offene Seite be- und entladen werden.

Der Manipulator 6 enthält mehrere über und/oder nebeneinander angeordnete Aufnahmefächer 14, in denen jeweils rechnergesteuerte Verschiebevorrichtungen 15 angeordnet sind. Diese rechnergesteuerten Verschiebevorrichtungen dienen zum Ziehen von Arzneimittelpackungen 13 aus dem jeweils gegenüberliegenden Regalfach 12 in das Aufnahmefach 14 des Manipulators 6 oder zum Schieben von Arzneimittelpackungen 13 aus dem Aufnahmefach 14 des Manipulators 6 in das gegenüberliegende Regalfach 12 des Regals 9 oder 10. Der Manipulator 6 ist also sowohl zur Einlagerung als auch zur Auslagerung von Arzneimittelpackungen 13 geeignet. Dadurch dass der Manipulator 6 mehrere (beim Ausführungsbeispiel insgesamt acht) Aufnahmefächer 14 aufweist, ist es möglich, mit dem Manipulator 6 jeweils Kommissionen von mehreren Arzneimittelpackungen 13 zusammenzustellen, bzw. ggf. vorne in den Regalfächern 12 liegende Fehlpackungen zwischen zu speichern, um an die in den Regalfächern 12 weiter hinten liegenden Gutpackungen heranzukommen. Bei all diesen Vorgängen braucht der Manipulator 6 vor dem Regal 12 bzw. 13 nur kurze Wege zurückzulegen.

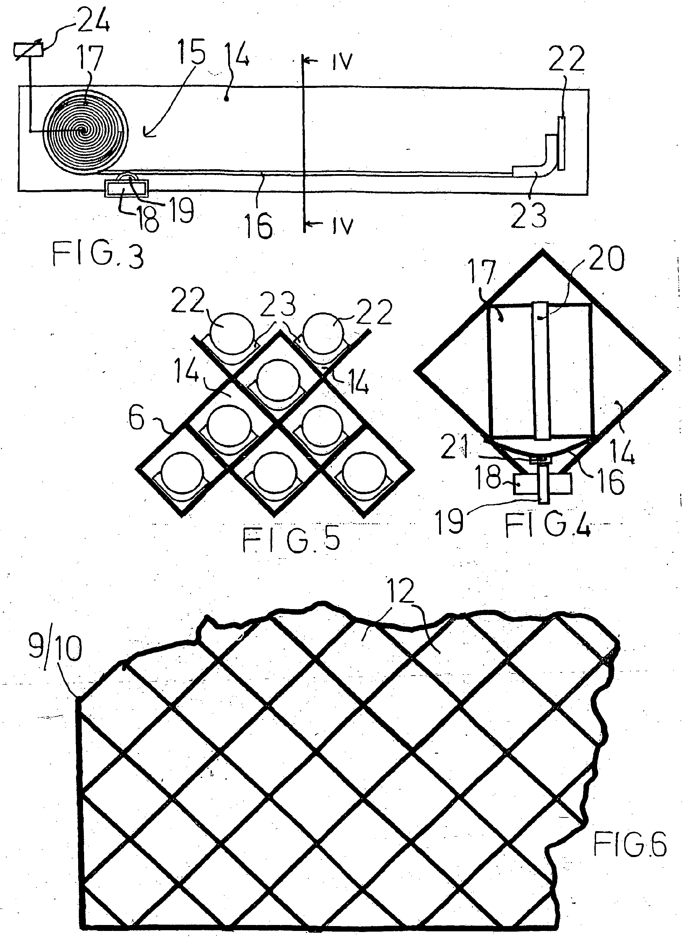

Wie aus Figur 5 ersichtlich ist, hat der Manipulator 6 an seiner Oberseite zwei nach oben offene Aufnahmefächer 14 für die Aufnahme von besonders sperrigen Arzneimittelpackungen 13. Außerdem ist aus der Zeichnung ersichtlich, dass die Böden der Regalfächer 12 der Regale 9 und 10 und der Aufnahmefächer 14 des Manipulators 6 jeweils V-förmig ausgebildet sind. Das hat den Vorteil, dass sich die auf diesen Böden aufliegenden Arzneimittelpackungen 13 mittig in jedem Fach zentrieren. Außerdem ist es mit den V-förmigen Böden einfacher, die jeweiligen Aufnahmefächer 15 des Manipulators 6 exakt auf das jeweils zu bedienende Regalfach 12 der Regale 9 oder 10 auszurichten. Hierzu braucht der Manipulator lediglich so angesteuert und verfahren zu werden, dass die Scheitel der beiden fluchtenden V-förmigen Böden exakt in einer Linie liegen. Das gilt auch dann, wenn die Regalfächer 12 durch in die Regalfächer 12 einsteckbare Zwischenböden in mehrere kleinere Regalfächer mit jeweils V-förmigen Böden unterteilt werden. Jedes dieser kleinen Regalfächer kann problemlos mit dem Manipulator 6 exakt angefahren werden.

Die Figuren 3 und 4 lassen insbesondere Einzelheiten der in den einzelnen Aufnahmefächern 14 des Manipulators 6 angeordneten Verschiebevorrichtungen 15 erkenne. Dies Verschiebevorrichtungen 15 verwenden als Verschiebeorgan ein gewölbtes Federstahlband 16, welches - wie ein Federstahlmaßband - in gestrecktem Zustand durch seine quer zur Längsrichtung verlaufenden Wölbung versteift ist und im gebogenen Zustand quer zu seiner Längsrichtung flach ausgebildet ist und dementsprechend leicht zu biegen ist. Infolge dessen lässt sich dieses Federband 16 am rückwärtigen Ende des Verschiebeweges innerhalb des Aufnahmefachs 14 leicht umlenken und kann in der Art eines Federstahlmaßbands zu einer Rolle 17 aufgewickelt bereitgehalten.

Dem gestreckten Abschnitt des Federstahlbandes 16 ist ein rechnergesteuerter Verschiebeantrieb 18 zugeordnet (vgl. Figur 3), der ein von einem Schrittmotor angetriebenes Zahnrad 19 aufweist, welches in eine an dem Federstahlband 16 befestigte biegsame Zahnstange 20 aus Kunststoff eingreift. Diese Zahnstange 20 ist zugleich als Saugschlauch 21 für einen am vorderen Ende des Federstahlbandes 16 befestigten Saugkopf 22 ausgebildet. Dieser Saugkopf 22 befindet sich an einem Gleitschlitten 23, der auf dem V-förmigen Boden des Aufnahmefaches 14 des Manipulators 6 bzw. in weitere vorgeschobenen Zustand des Regalsfachs 12 des Regals 9 bzw. 10 gleitet.

Der Saugkopf 22 ist über den Saugschlauch 21 unter Zwischenschaltung von Steuerventilen 24 mit einer nicht näher dargestellten Vakuumquelle verbunden und kann durch entsprechende Ansteuerung die an ihm anliegende Arzneimittelpackung 13 durch Ansaugen fixieren bzw. durch Druckausgleich freigeben.

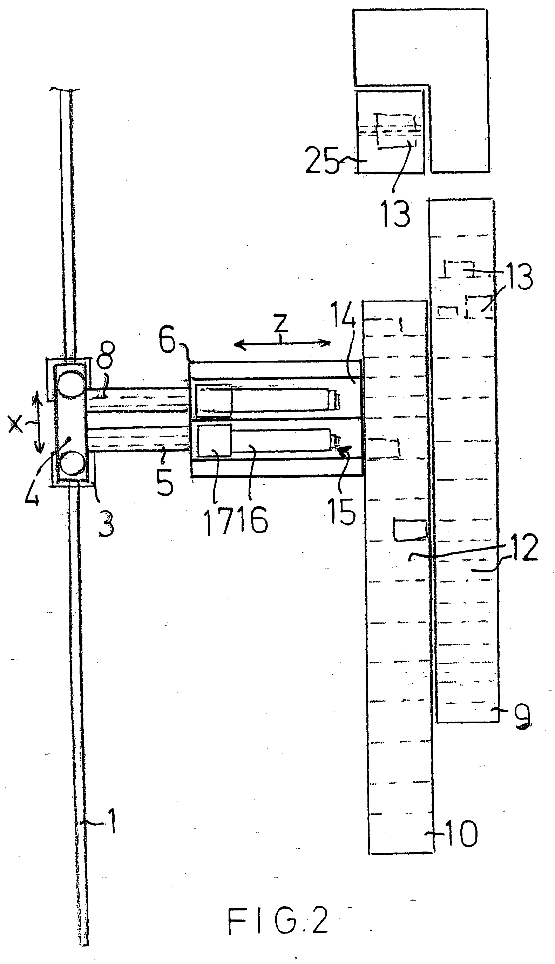

Wie schließlich noch aus Figur 2 ersichtlich ist, ist neben dem Regal 9 eine zentrale Erfassungsstation für die ein- und auszulagernden Arzneimittelpackungen vorgesehen. Diese zentrale Erfassungsstation ist Gegenstand einer parallelen Patentanmeldung und aus diesem Grund hier nicht im einzelnen beschrieben. Diese zentrale Erfassungsstation weist einen Übergabeboden 25 für die einzulagernden und auszulagernden Arzneimittelpackungen auf. Dieser Übergabeboden 25 ist somit transporttechnisch die Schnittstelle zwischen der zentralen Erfassungsstation und der oben erläuterten Vorrichtung zur Handhabung von Arzneimittelpackungen.

Diese Schnittstelle wird erfindungsgemäß ebenfalls von dem Manipulator bedient. Hierzu ist der Übergabeboden 25 derart vor dem Manipulator 6 und dessen Führungssystem angeordnet, dass jedes Aufnahmefach 14 des Manipulators 6 vor diesem Übergabeboden 25 positionierbar ist. Die Übergabe bzw. Entnahme von Arzneimittelpackungen erfolgt auf die gleiche Art und Weise, wie bei den zuvor beschriebenen Regalfächern. Der Übergabeboden 25 ist ebenso wie die Böden der Aufnahmefächer 14 des Manipulators 6 und die Böden der Regalfächer 12 V-förmig ausgebildet, was die bereits oben erläuterten Vorteile im Hinblick auf die Ausrichtung des Manipulators 6 die Führung der Arzneimittelpackungen während der Übergabe hat.

Beim Ausführungsbeispiel sind die Regale 9 und 10 nur rechts vom Manipulator 6 angeordnet. Abweichend vom Ausführungsbeispiel können aber auch beidseitig vom Manipulator 6 Regale angeordnet werden. In diesem Fall ist der Manipulator 6 nach beiden Seiten hin mit Aufnahmefächern 14 und diesen zugeordneten Verschiebevorrichtungen 15 versehen. Alternativ kann der Manipulator auch wendbar geführt sein, um auf diese Weise rechts und links von seinem Fahrweg Regale bedienen zu können.

## Patentansprüche

1. Vorrichtung zur Handhabung von Arzneimittelpackungen an einem Regallager für Apotheken, mit mindestens einem Regal, dessen Regalfächer in Richtung auf einen rechnergesteuerten Manipulator offen sind, der zum Einlegen, zum Entnehmen und zur Kommissionierung von Arzneimittelpackungen dient und an Führungen geführt rechnergesteuert vor dem Regel verfahrbar ist, wobei, der Manipulator (6) mehre in Richtung auf die Regalfächer (12) offene Aufnahmefächer (14) aufweist, die neben und/oder übereinander angeordnet sind, wobei der Manipulator (6) rechnergesteuert derart verschiebbar ist, dass jedes Aufnahmefach (14) des Manipulators (6) vor jedem Regalfach (12) des Regals (9, 10) positionierbar ist, und wobei jedem Aufnahmefach (14) des Manipulators (6) eine rechnergesteuerte Verschiebevorrichtung (15) zum Ziehen von Arzneimittelpackungen (13) aus dem Regalfach (12) des Regals (9, 10) in das gegenüberliegende Aufnahmefach (15) des Manipulators (6) sowie zum Schieben von Arzneimittelpackungen (13) aus dem Aufnahmefach (14) des Manipulators (6) in das gegenüberliegende Regalfach (12) des Regals (9, 10) zugeordnet ist,
**dadurch gekennzeichnet,**
**dass** die in den Aufnahmefächern (14) des Manipulators (6) angeordneten Verschiebeeinrichtungen (15) jeweils ein als Verschiebeorgan dienendes Federstahlband (16) aufweisen, welches in gestrecktem Zustand durch eine quer zu seiner Längsrichtung verlaufende Wölbung versteift ist und im gebogenen Zustand quer zu seiner Längsrichtung flach ausgebildet ist.

2. Vorrichtung nach Anspruch 1, **dadurch gekennzeichnet, dass** das Federstahlband (16) am rückwärtigen Ende des Verschiebeweges zu einer Rolle (17) aufgewickelt bereitgehalten wird.

3. Vorrichtung nach Anspruch 2, **dadurch gekennzeichnet, dass** dem gestreckten Abschnitt des Federstahlbandes (16) ein rechnergesteuerter Verschiebeantrieb (18) zugeordnet ist.

4. Vorrichtung nach Anspruch 3, **dadurch gekennzeichnet, dass** der Verschiebeantrieb (18) ein von einem Schrittmotor angetriebenes Zahnrad (19) aufweist, welches in eine dem Federstahlband (16) zugeordnete, biegsame Zahnstange (20) eingreift.

5. Vorrichtung nach Anspruch 4, **dadurch gekennzeichnet, dass** dem vorderen Ende des Federstahlbandes (16) ein Gleitschlitten (23) zugeordnet ist.

6. Vorrichtung nach Anspruch 5, **dadurch gekennzeichnet, dass** der Gleitschlitten (23) mit einem Saugkopf (22) zum Festhalten und/oder Freigeben von zu bewegenden Arzneimittelpackungen (13) versehen ist.

7. Vorrichtung nach Anspruch 6, **dadurch gekennzeichnet, dass** der Saugkopf (22) mit einem entlang dem Federstahlband (16) verlaufenden Saugschlauch (21) verbunden ist, über den der Saugkopf (23) gesteuert an ein Vakuum anschließbar ist.

8. Vorrichtung nach Anspruch 7, **dadurch gekennzeichnet, dass** der Saugschlauch (21) und die biegsame Zahnstange (20) mit dem Federstahlband (16) zu einer baulichen Einheit verbunden sind.

9. Vorrichtung nach Anspruch 8, **dadurch gekennzeichnet, dass** der Saugschlauch (21) und die biegsame Zahnstange (20) einstückig aus Kunststoff hergestellt sind.

10. Vorrichtung nach Anspruch 1, **gekennzeichnet durch** mindestens zwei in Einlegerichtung hintereinander angeordnete Regale (9, 10), wobei das vordere Regal (10) zur Freigabe des hinteren Regals (9) rechnergesteuert seitlich verschiebbar ist und der Manipulator (6) ebenfalls rechnergesteuert in seinen Führungen (8) in Richtung auf das hintere Regal (9) verschiebbar ist.

11. Vorrichtung nach Anspruch 1 oder 10, **dadurch gekennzeichnet, dass** die Böden der Regalfächer (12) des Regals (9, 10) und der Aufnahmefächer (14) des Manipulators (6) jeweils V-förmig ausgebildet sind.

12. Vorrichtung nach Anspruch 11, **dadurch gekennzeichnet, dass** die Regalfächer (12) durch einsetzbare Zwischenböden in kleinere Regalfächer mit ebenfalls V-förmigen Böden unterteilbar sind.

13. Vorrichtung nach Anspruch 1, **dadurch gekennzeichnet, dass** der Manipulator (6) an seiner Oberseite mindestens ein Aufnahmefach (14) aufweist, welches nach oben offen ausgebildet ist.

14. Vorrichtung nach Anspruch 1 oder 10, **dadurch gekennzeichnet, dass** neben dem oder den Regalen (9, 10) eine automatisch arbeitende zentrale Erfassungsstation für die ein- und auszulagernden Arzneimittelpackungen (13) angeordnet ist, die mindestens ein den Aufnahmefächern (14) des Manipulators (6) zugewandten Übergabeboden (25) für einzulagernde oder auszulagernde Arzneimittelpackungen (13) aufweist, wobei jedes Aufnahmefach (14) des Manipulators (6) vor diesem Übergabeboden (25) positionierbar ist.

15. Vorrichtung nach Anspruch 14, **dadurch gekennzeichnet, dass** der Übergabeboden (25) der zentralen Erfassungsstation ebenso wie die Böden der Aufnahmefächer (14) des Manipulators (6) und die Böden der Regalfächer V-förmig ausgebildet ist.

## Claims

1. Device for handling pharmaceutical packages on a shelf storage unit for pharmacies having at least one shelf, the shelf compartments of which being open in a direction of a computer-controlled manipulator which serves for storing, removing and picking pharmaceutical packages and is moveable guided on guides in a computer-controlled manner in front of the shelf, wherein the manipulator (6) comprises a plurality of receiving compartments (14) open in the direction of the shelf compartments (12), said receiving compartments being arranged beside and/or above each other, wherein the manipulator (6) is displaceable in a computer-controlled manner such that each receiving compartment (14) of the manipulator (6) is positionable in front of each shelf compartment (12) of the shelf (9, 10) and wherein each receiving compartment (14) of the manipulator (6) is assigned a computer-controlled displacement device (15) for pulling pharmaceutical packages (13) from the shelf compartment (12) of the shelf (9, 10) into the opposing receiving compartment (15) of the manipulator (6) as well as for pushing pharmaceutical packages (13) from the receiving compartment (14) of the manipulator (6) into the opposing shelf compartment (12) of the shelf (9, 10),
**characterised in that**
the displacement devices (15) arranged in the receiving compartments (14) of the manipulator (6) respectively comprise a spring steel strip (16) serving as a displacement body which is stiffened in the stretched state by a curve running transverse to the longitudinal direction thereof and is configured flat in the curved state transverse to the longitudinal direction thereof.

2. Device according to claim 1, **characterised in that** the spring steel strip (16) is held ready at the rearward end of the displacement path in a coiled manner to form a roll (17).

3. Device according to claim 2, **characterised in that** a computer-controlled displacement drive (18) is assigned to the stretched section of the spring steel strip (16).

4. Device according to claim 3, **characterised in that** the displacement drive (18) comprises a toothed wheel (19) driven by a step motor, said toothed wheel engaging into a flexible toothed rack (20) assigned to the spring steel strip (16).

5. Device according to claim 4, **characterised in that** a sliding carriage (23) is assigned to the front end of the spring steel strip (16).

6. Device according to claim 5, **characterised in that** the sliding carriage (23) is provided with a suction head (22) for holding and/or releasing pharmaceutical packages (13) to be moved.

7. Device according to claim 6, **characterised in that** the suction head (22) is connected to a suction tube (21) running along the spring steel strip (16), via which suction tube the suction head (23) is connectable in a controlled manner to a vacuum.

8. Device according to claim 7, **characterised in that** the suction tube (21) and the flexible toothed rack (20) are connected to the spring steel strip (16) to form a structural unit.

9. Device according to claim 8, **characterised in that** the suction tube (21) and the flexible toothed rack (20) are manufactured integrally from plastic.

10. Device according to claim 1, **characterised by** at least two shelves (9, 10) arranged behind each other in a storage direction, wherein the front shelf (10) is displaceable laterally in a computer-controlled manner to allow access to the rear shelf (9) and the manipulator (6) is also displaceable in a computer-controlled manner in the guides thereof (8) in the direction of the rear shelf (9).

11. Device according to claim 1 or 10, **characterised in that** the bases of the shelf compartments (12) of the shelves (9, 10) and of the receiving compartments (14) of the manipulator (6) are respectively configured in a V-shape.

12. Device according to claim 11, **characterised in that** the shelf compartments (12) are dividable into smaller shelf compartments with similarly V-shaped bases by insertable intermediate bases.

13. Device according to claim 1, **characterised in that** the manipulator (6) comprises at least one receiving compartment (14) on the upper side thereof which is configured open at the top.

14. Device according to claim 1 or 10, **characterised in that** an automatically operating central detector station for the pharmaceutical packages (13) to be stored or removed is arranged beside the shelf or shelves (9, 10), said detector station comprises at least one transfer base (25), facing the receiving compartments (14) of the manipulator (6), for pharmaceutical packages (13) to be stored or removed, wherein each receiving compartment (14) of the manipulator (6) is positionable in front of this transfer base (25).

15. Device according to claim 14, **characterised in that** the transfer base (25) of the central detector station is also configured in a V-shape like the bases of the receiving compartments (14) of the manipulator (6) and the bases of the shelf compartments.

## Revendications

1. Dispositif pour la manipulation d'emballages de médicaments dans un entrepôt à rayonnage pour des pharmacies, ayant au moins un rayonnage, dont les rayons sont ouverts dans une direction vers un manipulateur commandé par ordinateur qui est utilisé pour introduire, prendre et commissionner des emballages de médicaments, et qui peut être déplacé en face du rayonnage de manière commandée par ordinateur en étant guidé par des guides, dans lequel le manipulateur (6) présente plusieurs compartiments de stockage (14) ouverts dans la direction des rayons (12), qui sont disposés les uns à côté et/ou au-dessus des autres, dans lequel le manipulateur (6) peut se déplacer de manière commandée par ordinateur de telle sorte que chaque compartiment de stockage (14) du manipulateur (6) peut être positionné devant chaque rayon (12) du rayonnage (9, 10), et dans lequel chaque compartiment de stockage (14) du manipulateur (6) comporte un dispositif de déplacement commandé par ordinateur (15) pour tirer des emballages de médicaments (13) du rayon (12) du rayonnage (9, 10) jusque dans le compartiment de stockage opposé (15) du manipulateur (6), de même que pour pousser des emballages de médicaments (13) hors du compartiment de stockage (14) du manipulateur (6) jusque dans le rayon opposé (12) du rayonnage (9, 10),
**caractérisé en ce que**
les dispositifs de déplacement (15) disposés dans les compartiments de stockage (14) du manipulateur (6) présentent chacun une bande en acier à ressort servant d'organe de déplacement (16), qui est raidie dans un état étiré par une voûte s'étendant transversalement à sa direction longitudinale, et qui est formée plate dans un état cintré transversalement à sa direction longitudinale.

2. Dispositif selon la revendication 1, **caractérisé en ce que** la bande en acier à ressort (16) est stockée enroulée à l'extrémité arrière de la course de déplacement en un rouleau (17).

3. Dispositif selon la revendication 2, **caractérisé en ce que** le tronçon étiré de la bande en acier à ressort (16) est associé à un entraînement de déplacement commandé par ordinateur (18).

4. Dispositif selon la revendication 3, **caractérisé en ce que** l'entraînement de déplacement (18) comprend une roue dentée (19) entraînée par un moteur pas à pas, qui vient en prise avec une crémaillère flexible (20) associée à la bande en acier à ressort (16).

5. Dispositif selon la revendication 4, **caractérisé en ce que** l'extrémité avant de la bande en acier à ressort (16) est associée à un chariot coulissant (23).

6. Dispositif selon la revendication 5, **caractérisé en ce que** le chariot coulissant (23) est prévu avec une tête d'aspiration (22) pour le maintien et/ou la libération d'emballages de médicaments (13) devant être déplacés.

7. Dispositif selon la revendication 6, **caractérisé en ce que** la tête d'aspiration (22) est reliée à un flexible d'aspiration (21) s'étendant le long de la bande en acier à ressort (16), auquel la tête d'aspiration (23) peut être reliée de manière commandée par un vide.

8. Dispositif selon la revendication 7, **caractérisé en ce que** le flexible d'aspiration (21) et la crémaillère flexible (20) (16) sont reliés à la bande en acier à ressort pour former une unité structurelle.

9. Dispositif selon la revendication 8, **caractérisé en ce que** le flexible d'aspiration (21) et la crémaillère flexible (20) sont réalisés d'un seul tenant en matière plastique.

10. Dispositif selon la revendication 1, **caractérisé par** au moins deux rayons (9, 10) agencés à la suite dans la direction d'insertion, dans lequel le rayon avant (10) peut être déplacé de manière commandée par ordinateur pour libérer le rayon arrière (9), et le manipulateur (6) peut également être déplacé de manière commandée par ordinateur via ses guides (8) en direction du rayon arrière (9).

11. Dispositif selon la revendication 1 ou 10, **caractérisé en ce que** les planchers des rayons (12) des rayonnages (9, 10) et le compartiment de stockage (14) du manipulateur (6) sont formés chacun en forme de V.

12. Dispositif selon la revendication 11, **caractérisé en ce que** les rayons (12) peuvent être divisés par des planchers intermédiaires opérationnels en rayons plus petits, à l'aide de planchers également en forme de V.

13. Dispositif selon la revendication 1, **caractérisé en ce que** le manipulateur (6), sur sa face supérieure, présente au moins un compartiment de stockage (14), qui est formé ouvert vers le haut.

14. Dispositif selon la revendication 1 ou 10, **caractérisé en ce qu'**à côté ou au-dessus des rayonnages (9, 10) est disposée une station centrale d'enregistrement fonctionnant de manière automatisée pour les emballages de médicaments (13) qui entrent et qui sortent, qui présente au moins un plancher de transfert (25) qui donne vers le compartiment de stockage (14) du manipulateur (6) pour les emballages de médicament (13) qui entrent et qui sortent, dans lequel chaque compartiment de stockage (14) du manipulateur (6) peut être positionné devant ce plancher de transfert (25).

15. Dispositif selon la revendication 14, **caractérisé en ce que** le plancher de transfert (25) de la station centrale d'enregistrement, ainsi que les planchers du compartiment de stockage (14) du manipulateur (6) et les planchers des rayons sont formés en forme de V.
